# EUROPÄISCHE PATENTSCHRIFT

(11) **EP 0 639 722 B1**
(45) Veröffentlichungstag und Bekanntmachung des Hinweises auf die Patenterteilung: **22.07.1998**
(21) Anmeldenummer: 94107255.5
(22) Anmeldetag: 10.05.1994
(51) Int. Cl.: F16C 33/76, B65G 39/09, F16C 33/80, F16C 35/06, F16C 13/02

(54) **Förderbandrolle mit einem abgedichteten Lager**
Conveyor roll with a sealed bearing
Rouleau de convoyeur avec palier étanche

(30) Priorität: 20.08.1993 DE 4327988
(43) Veröffentlichungstag der Anmeldung: 22.02.1995
(73) Patentinhaber: Precismeca-Montan Gesellschaft für Fördertechnik mbH, 66280 Sulzbach (DE)
(72) Erfinder: Mayer, Manfred, D-66299 Friedrichsthal (DE)
(74) Vertreter: Radünz, Ingo, Dipl.-Ing.

(56) Entgegenhaltungen:
- EP-A- 0 059 270
- AT-A- 349 839
- DE-A- 1 756 340
- DE-A- 2 421 379
- DE-A- 3 141 750
- DE-A- 4 231 863
- DE-C- 644 290
- FR-A- 1 164 682
- FR-A- 1 254 918
- FR-A- 1 474 106
- FR-A- 2 290 775
- FR-A- 2 514 442
- GB-A- 2 030 659
- GB-A- 2 225 066
- US-A- 2 757 988

## Beschreibung

Die Erfindung betrifft eine Förderbandrolle mit den Merkmalen des Oberbegriffes des Patentanspruches 1.

Bei einer aus der DE-A-2 421 379 bekannten Förderbandrolle ist das Wälzlager durch einen in eine Ringnut der Rollenachse eingelegten offenen Federring fixiert, wobei sich der innere Laufring des Wälzlagers mit einer Schulter an den Federring anlegt. Die Labyrinthdichtung, die mit der Abschlußkappe eine vormontierte Baueinheit bildet, ist hinter dem Federring auf die Rollenachse geschoben und mit einer Randausnehmung versehen, die den Federring lose übergreift. Bei der Montage einer solchen Förderbandrolle ist für das Aufschieben des Wälzlagers, des Federringes und der Labyrinthdichtung jeweils ein Arbeitsgang erforderlich, wobei für das Einsetzen des Federringes ein Spezialwerkzeug verwendet werden muß.

Der Erfindung liegt die Aufgabe zugrunde, die gattungsgemäße Förderbandrolle so zu gestalten, daß der Montageaufwand für die axiale Sicherung der Lageranordnung verringert wird.

Diese Aufgabe wird bei einer gattungsgemäßen Förderbandrolle erfindungsgemäß durch die kennzeichnenden Merkmale des Patentanspruches 1 gelöst. Eine vorteilhafte Ausgestaltung der Erfindung ist Gegenstand des Unteranspruches.

Bei der erfindungsgemäßen Förderbandrolle ist der Sprengring in die Labyrinthdichtung, die mit der Abschlußkappe eine vormontierte Baueinheit bildet, integriert und kann mit dieser auf die Rollenachse aufgeschoben werden. Bei der Montage der Dichtringanordnung kann dadurch ein Arbeitsgang eingespart werden, und es ist für das Einsetzen des Sprengringes auf die Rollenachse kein Werkzeug erforderlich. Ist die Labyrinthdichtung zusätzlich mit einer Staubkappe versehen, so ist auch diese Bestandteil der vormontierten Baueinheit.

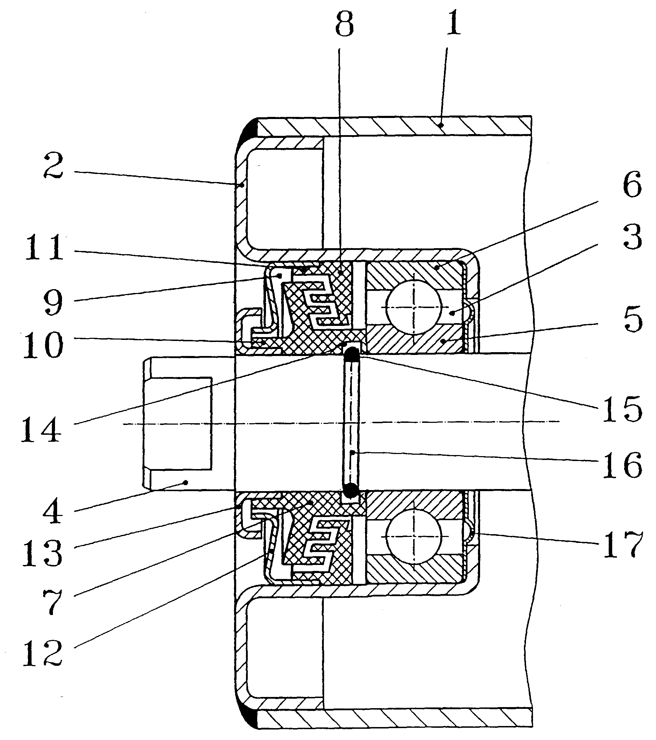

Ein Ausführungsbeispiel der Erfindung ist in der Zeichnung dargestellt und wird im folgenden näher erläutert. Die Zeichnung zeigt den Längsschnitt durch das Ende einer Förderbandrolle.

Eine Förderbandrolle, z. B. eine Tragrolle, weist einen Rollenmantel 1 auf, der an beiden Enden mit einem Z-förmig ausgebildeten Rollenboden 2 fest verbunden ist. Der Rollenmantel 1 ist über Wälzlager 3 auf einer Rollenachse 4 gelagert. Der Innenring 5 dieses Wälzlagers 3 ist mit Preßsitz auf die feststehende Rollenachse 4 geschoben, während sich der mit dem Rollenmantel 1 drehende Außenring 6 des Wälzlagers 3 in den Rollenboden 2 eingepreßt ist. Das Wälzlager 3 ist auf der zum Inneren des Rollenmantels 1 weisenden Seite durch eine Scheibe 17 abgeschlossen.

Auf der Außenseite des Wälzlagers 3 ist eine Labyrinthdichtung vorgesehen, die einen inneren Ring 7 und einen äußeren Ring 8 aus Kunststoff enthält. Der innere Ring 7 ist auf die Rollenachse 4 und der äußere Ring 8 ist in den Rollenmantel 1 gepreßt. Die Ringe 7, 8 weisen nach innen gerichtete Vorsprünge auf, die zahnartig ineinander greifen und so eine labyrinthartige Dichtkammer 9 bilden. Die Ringe 7, 8 der Labyrinthdichtung sind jeweils mit einem nach außen weisenden Ringflansch 10, 11 versehen, die beide radial außen von einer aus Metall bestehenden, ringförmigen und im Querschnitt Z-förmigen Abschlußkappe 12 übergriffen sind. Zur weiteren Abdichtung der Dichtkammer 9 kann, insbesondere bei einem Einsatz der Förderbandrolle in einer staubhaltigen Atmosphäre, eine ringförmige Staubkappe 13 vorgesehen werden. Die Staubkappe 13 ist im Querschnitt U-förmig und greift von außen über einen nach außen weisenden Ringflansch der Abschlußkappe 12 und von innen über den Ringflansch 10 des inneren Ringes 7 der Labyrinthdichtung.

Der innere Ring 7 der Labyrinthdichtung ist auf der dem Wälzlager 3 zugewandten Seite mit einer ringförmigen Ausnehmung 14 versehen. In dieser ringförmigen Ausnehmung 14 ist ein offener Sprengring 15 von vorzugsweise rundem Querschnitt gehalten. Im eingebauten Zustand greift der Sprengring 15 in eine Ringnut 16 ein, die in der Rollenachse 4 angebracht ist. Auf diese Weise sind sowohl das Wälzlager 3 als auch die Labyrinthdichtung auf der Rollenachse 4 fixiert.

Der innere Ring 7 und der äußere Ring 8 der Labyrinthdichtung, die Abschlußkappe 12 und, falls vorgesehen, die Staubkappe 13 bilden eine vormontierte Baueinheit. Diese Baueinheit wird mit dem in den inneren Ring 7 der Labyrinthdichtung eingesetzten Sprengring 15 in einem Arbeitsgang auf die Rollenachse 4 geschoben, wodurch das Wälzlager 3 und die Labyrinthdichtung in ihrer Lage auf der Rollenachse 4 fixiert werden. Dabei wird mit dem Aufschieben der Baueinheit der Sprengring 15 ohne Verwendung eines Spezialwerkzeuges in die Ringnut 16 der Rollenachse 4 gedrückt.

## Patentansprüche

1. Förderbandrolle mit einem Rollenmantel (1), der beidseitig auf einer Rollenachse (4) über Rollenböden (2) und Wälzlager (3) abgestützt ist, die jeweils durch einen Sprengring (15) fixiert und nach außen durch eine aus einem inneren Ring (7) und einen äußeren Ring (8) bestehende Labyrinthdichtung abgedichtet sind, wobei der Sprengring (15) in eine auf der Rollenachse (4) angebrachten Ringnut (16) eingelegt ist, eine Abschlußkappe (12) einen nach außen weisenden Ringflansch (10, 11) des inneren und des äußeren Ringes (7, 8) der Labyrinthdichtung übergreift und die Ringe (7, 8) der Labyrinthdichtung mit der Abschlußkappe (12) eine vormontierte Baueinheit bilden, dadurch gekennzeichnet, daß der innere Ring (7) der Labyrinthdichtung auf der dem Wälzlager (3) zugewandten Seite mit einer ringförmigen Ausnehmung (14) versehen ist, in der der Sprengring (15) gehalten ist.

2. Förderbandrolle nach Anspruch 1, dadurch gekennzeichnet, daß eine Staubkappe (13) die nach außen weisenden Ringflansche des inneren Ringes (7) der Labyrinthdichtung und der Abschlußkappe (12) übergreift und ein Bestandteil der vormontierten Baueinheit ist.

## Claims

1. Conveyor belt roller with a roller shell (1), which is supported at both ends on a roller axle (4) by way of roller bases (2) and roller-bearings (3), which are each time fixed by a spring ring (15) and are sealed off outwardly by a labyrinth seal consisting of an inner ring (7) and an outer ring (8), wherein the spring ring (15) is laid into an annular groove (16) formed on the roller axle (4), a closure cap (12) engages over an outwardly facing annular flange (10, 11) of the inner and the outer ring (7, 8) of the labyrinth seal and the rings (7, 8) of the labyrinth seal together with the closure cap (12) form a preassembled constructional unit, characterised thereby that the inner ring (7) of the labyrinth seal is provided on the side, which faces the roller-bearing (3), with an annular recess (14), in which the spring ring (15) is retained.

2. Conveyor belt roller according to claim 1, characterised thereby that a dust cap (13) engages over the outwardly facing annular flange of the inner ring (7) of the labyrinth seal and the closure cap (12) and is a component of the preassembled constructional unit.

## Revendications

1. Rouleau pour bande transporteuse, comportant une enveloppe de rouleau (1), soutenue des deux côtés sur un axe de rouleau (4) par l'intermédiaire de fonds de rouleau (2) et de paliers à roulement (3), fixés chacun au moyen d'un anneau à écartement (15) et isolés de façon étanche vers l'extérieur au moyen d'un joint d'étanchéité à labyrinthe constitué d'une bague intérieure (7) et une bague extérieure (8), l'anneau à écartement (15) étant inséré dans une gorge annulaire (16) ménagée sur l'axe de rouleau (4), un capuchon de fermeture (12) entourant une bride annulaire (10, 11), tournée vers l'extérieur et appartenant aux bagues intérieure et extérieure (7, 8) du joint d'étanchéité à labyrinthe, et les bagues (7, 8) constituant, avec le capuchon de fermeture (12), un ensemble de construction pré-monté, caractérisé en ce que la bague intérieure (7) du joint d'étanchéité à labyrinthe est pourvue, sur la face tournée vers le palier à roulement (3), d'un évidement (14) à forme annulaire dans lequel est maintenu l'anneau d'écartement (15).

2. Rouleau de bande transporteuse selon la revendication 1, caractérisé par un capuchon anti-poussière (13), qui entoure les brides annulaires, tournées vers l'extérieur, de la bague intérieure (7) du joint d'étanchéité à labyrinthe et du capuchon de fermeture (12) et fait partie de l'ensemble de construction prémontée.
